# EUROPÄISCHE PATENTSCHRIFT

(11) **EP 3 804 586 B1**
(45) Veröffentlichungstag und Bekanntmachung des Hinweises auf die Patenterteilung: **26.01.2022**
(21) Anmeldenummer: 19202351.3
(22) Anmeldetag: 10.10.2019
(51) Int. Cl.: A47J 42/08, A47J 42/18, A47J 42/38

(54) **KAFFEEMÜHLE**
COFFEE MILL
MOULIN À CAFÉ

(43) Veröffentlichungstag der Anmeldung: 14.04.2021
(73) Patentinhaber: Hemro International AG, 8184 Bachenbülach (CH)
(72) Erfinder: DUNKELBERG, Oliver, 8846 Willerzell (CH)
(74) Vertreter: Bremi, Tobias Hans

(56) Entgegenhaltungen:
- WO-A1-2018/185570
- WO-A1-2019/122397
- US-A- 4 502 643
- US-A1- 2019 254 464
- US-B2- 9 427 110

## Beschreibung

### TECHNISCHES GEBIET

Die vorliegende Erfindung betrifft eine Kaffeemühle sowie ein Verfahren zum Betrieb einer Kaffeemühle und Verwendung in einer derartigen Kaffeemühle.

### STAND DER TECHNIK

Kaffeemühle sind Vorrichtungen, mit welchen gebrannte Kaffeebohnen zu gemahlenem Kaffee weiterverarbeitet werden. Während früher ein Großteil des Kaffees von Verteilern gemahlen wurde und anschließend in gemahlener Form beim Endkunden, sei es im privaten oder im kommerziellen Bereich eingesetzt wurde, haben sich inzwischen die Kundenanforderungen weiter verschoben, weil nur frisch gemahlener Kaffee wirklich guten Kaffee herzustellen erlaubt. Entsprechend werden zunehmend Kaffeemühlen beim Endkunden eingesetzt, nicht nur in Kaffeebars, sondern auch zunehmend in Restaurants und ähnlichen Einrichtungen, zum Teil sogar privat.

WO-A-2018185570 beschreibt einen Kaffeemühlen-Dosierer, wobei die angetriebenen und feststehenden Mahlringe Zähne aufweisen, die einander zugewandt und in Bezug auf eine Einstellrichtung voneinander beabstandet sind, und wobei mindestens einer der Mahlringe in Bezug aufeinander entlang der Einstellrichtung beweglich gelagert ist. Vorteilhafterweise umfasst der Dosierer ein automatisches Stellelement, das durch Übertragungsmittel mit dem angetriebenen Mahlring und/oder dem feststehenden Mahlring verbunden ist, um den gegenseitigen Abstand zwischen den Zähnen der Mahlringe entlang der Einstellrichtung einzustellen und zu modifizieren. US-A-2019254464 beschreibt ein Verfahren zur Selbstkalibrierung der Kaffeedosis für eine Mühle-Dosier-Vorrichtung mit elektronischer Steuerung, die mit einer Wiegeeinrichtung und einer Granulometrie-Einstelleinrichtung mit einem Warnmikroschalter versehen ist. Das Verfahren sieht vor: eine erste Einstellung der Solldosis mit temporären Mahlzeiten; eine zweite Einstellung der Toleranz- und Zuverlässigkeitsbereiche der abgegebenen Dosen zum Zwecke der Neuberechnung; die automatische Kontrolle des Gewichts jeder tatsächlich abgegebenen Dosis; die automatische Neuberechnung der Mahlzeiten gemäß einer gewöhnlichen Berechnungslogik, wenn man drei aufeinanderfolgende Dosen außerhalb der Toleranz erkennt, die alle innerhalb des positiven oder negativen Zuverlässigkeitsbereichs liegen, oder gemäß einer erzwungenen Berechnungslogik, wenn der Mikroschalter eine Granulometrieänderung erkennt; automatische Kalibrierung des Gerätes nach den neu berechneten Zeiten.

US-B-9427110 beschreibt ein Gerät zum Mahlen von Kaffee. Die Vorrichtung umfasst: einen Schleifmechanismus; einen Entladungsbereich; eine Benutzersteuerung, die es einem Benutzer ermöglicht, Mahlpräferenzen auszuwählen; ein Anzeigeelement zum Anzeigen von Daten, die Benutzereingaben in die Benutzersteuerung anzeigen; ein mit der Benutzersteuerung gekoppeltes Prozessorelement und ein Anzeigeelement zum Steuern des Betriebs des Mahlmechanismus. Die Vorrichtung ist so angepasst, dass sie eine Feinsteuerung der Mahlgröße bereitstellt und diskrete Dosen entsprechend einer Benutzerpräferenz und Steuereingaben abgibt; und Anzeigedarstellungen, die eine Reihe von Kaffeemühlenfunktionen darstellen.

Die Qualität von gebrühtem Kaffee hängt nun zudem in starkem Maße von der Qualität dieser Mahlung ab, denn für einen bestimmten Brühprozess respektive eine bestimmte Art der Maschine ist nur ein Kaffee mit dem angepassten Mahlgrad wirklich geeignet. Die Einstellung des Mahlgrades ist entsprechend bei einer Kaffeemühle entscheidend. Bisher wird der Mahlgrad in der Regel an einem Handrad oder Einstellring außen am Gehäuse manuell eingestellt. Das Problem dabei ist, dass diese Einstellung zu ungenau ist, und insbesondere im Laufe der Zeit wegen des Spiels der mechanischen Umsetzung unzuverlässig wird und zum Teil sogar systematische Abweichungen sukzessive aufgebaut werden.

Hier greift die vorliegende Erfindung ein.

### DARSTELLUNG DER ERFINDUNG

Es ist entsprechend unter anderem Aufgabe der vorliegenden Erfindung, eine Kaffeemühle bereitzustellen, die eine zuverlässigere Einstellung des Malgrades erlaubt, und trotzdem konstruktiv einfach und robust ist.

Gegenstand der vorliegenden Erfindung ist eine Kaffeemühle für das Mahlen von Kaffeebohnen zu gemahlenem Kaffee mit wenigstens einem Behälter oder einem Zuführungselement für Kaffeebohnen und wenigstens einer Mahlvorrichtung zum Mahlen der Kaffeebohnen. Die Mahlvorrichtung weist wenigstens ein erstes und ein zweites Mahlelement auf, zwischen welchen die Kaffeebohnen durch relative Rotation der beiden Mahlelemente gemahlen werden, wobei der Abstand der beiden Mahlelemente im Mahlprozess den Mahlgrad des gemahlenen Kaffees bestimmt. Wenigstens ein Mahlelement wird dabei i.d.R. durch einen Motor angetrieben.

Die Kaffeemühle nach der Erfindung ist dabei insbesondere dadurch gekennzeichnet, dass ein Stellelement vorgesehen ist, mit welchem durch Rotation eines Stellelements der Abstand der beiden Mahielemente eingestellt werden kann, und dass ein magnetischer Rotationspositionssensor vorgesehen ist, welcher die absolute Rotationsposition dieses Stellelements als Maß des Abstandes eindeutig direkt oder indirekt bestimmt und für die weitere Steuerung der Kaffeemühle bereitstellt.

Unter der absoluten Rotationsposition ist eine eineindeutig bestimmte Rotationsposition zu verstehen. Dies bedeutet, dass dort, wo der magnetische Rotationspositionssensor, der stationär angeordnet ist, das vor diesem Rotationspositionssensor rotierende Bauteil mit einem darin eingelagerten bipolaren Magneten eine Rotation von weniger als 360° durchläuft im Rahmen der maximalen Verstellung des Abstandes in der Maschine.

Es zeigt sich, dass ein derartiger magnetischer Rotationspositionssensor eine unerwartet einfache und im Zusammenhang mit einer solchen Kaffeemühle unerwartet stabile Möglichkeit der Messung des Abstandes der Mahlelemente ermöglicht. Die Bedingungen in einer solchen Kaffeemühle sind schwierig, da der Motor ein starkes Streufeld erzeugt, und da die extremen Vibrationen der Mühle und des Motors eine Vielzahl von üblichen anderen Sensoren in der Praxis nicht sinnvoll einsetzen lässt. Überraschenderweise kann ein magnetischer Rotationspositionssensor diese Aufgabe sehr zuverlässig übernehmen. Nach der Erfindung ist eine solche Kaffeemühle dadurch gekennzeichnet, dass ein erstes Mahlelement, vorzugsweise in Form eines Mahlringes, Mahlkegels oder einer Mahlscheibe, stationär vorgesehen ist und ein zweites Mahlelement, vorzugsweise in Form eines Mahlringes, Mahlkegels oder einer Mahlscheibe, drehbar gelagert ist, und im Mahlvorgang gegenüber dem ersten Mahlelement rotiert, und dass das zweite Mahlelement in einer Welle verbunden und über diese Welle vom Motor angetrieben wird. Es ist nun entweder möglich, die axiale Position des ersten oder des zweiten Mahlelements in einer solchen Vorrichtung über das Stellelement einzustellen.

Nach der Erfindung wird das vom Motor angetriebene Mahlelement durch das Stellelement eingestellt. Zudem ist die Kaffeemühle so ausgestaltet, dass die Welle in wenigstens einem Lagerelement, vorzugsweise wenigstens einem Lagerring gelagert ist, und wenigstens eines dieser Lagerelemente verschieblich gelagert ist und die Welle in diesem Lagerelement axial gekoppelt gelagert ist, sodass eine Verschiebung des Lagerelements in axialer Richtung eine entsprechende Verschiebung der Welle in der gleichen axialen Richtung bewirkt. Nun wird das Stellelement in Form eines Verstellstiftes ausgebildet und mit dem derart an die axiale Wellenposition angekoppelten Lagerelement gekoppelt, wobei der Verstellstift derart gelagert ist, dass eine Rotation des Verstellstiftes zu gleichzeitiger axialer Verschiebung des Lagerelements führt.

Das Lagerelement ist bevorzugt ein Lagerbüchse, die die Motorenwelle führt und sich selber nicht mitdreht. Die Lagerbüchse hat vorzugsweise ebenfalls eine konische Bohrung, vorzugsweise in einer Richtung senkrecht zur Achse der Welle, in die der Konus des Verstellstiftes eingreift. Die Motorenwelle ist vorzugsweise am unteren Ende, also an dem dem Mahlgehäuse mit den Mahlelementen entgegen gesetzten Ende, typischerweise auf der dem Mahlgehäuse abgewandten Seite des Motors, über eine Feder in Richtung weg vom Mahlgehäuse vorgespannt. In der Lagerbüchse befindet sich vorzugsweise ein Lager, dessen äußerer Lagerring die Motorenwelle aufnimmt (z.B. an einer Stufe der Motorenwelle, an der sich die Motorwelle in Richtung zum Mahlgehäuse verjüngt), wobei die Motorenwelle über den inneren Lagerring dieses Lagers mit einem Befestigungsmittel (z.B. mit einer axialen Schraube) durch den Laufscheibenflansch hindurch (welcher Laufscheibenflansch das rotierende Mahlelement hält) gegen einen axialen Versatz gesichert ist.

Der Verstellstift ist dabei über ein Gewinde gelagert (er kann beispielsweise ein Außengewinde aufweisen und in einer Lagerschale mit einem Innengewinde laufen) und er greift mit seiner Spitze in eine Kulisse im oder am Lagerelement an. Dabei bewirkt eine axiale Verschiebung des Verstellstiftes die axiale Verschiebung des Lagerelements. Die Spitze des Verstellstiftes ist bevorzugt bei einer solchen Bauweise konisch zulaufend ausgebildet, und die Kulisse in Form wenigstens einer entsprechenden schrägen Flanke, vorzugsweise in einer Ausnehmung des Lagerelements.

Das Stellelement, in Form eines Verstellstiftes, kann weiterhin bevorzugter Massen mechanisch an ein vom Benutzer manuell zu betätigendes Einstellelement, vorzugsweise in Form eines Verstellringes, angekoppelt sein, und der magnetische Rotationspositionssensor kann direkt am Stellelement oder an einem damit fest verbundenen weiteren Bauteil die Rotationsposition des Stellelements direkt messen. Alternativ ist es möglich, dass indirekt an einem mechanisch an das Stellelement angekoppelten, vom Einstellelement für den Benutzer verschiedenen Drehelement gemessen wird, dessen Rotation an die Rotation des Stellelements gekoppelt ist und im Rahmen des Verstellbereichs seinerseits eine maximale Rotation von weniger als 360° vollzieht.

In jedem Fall ist bevorzugt das Element, an welchem die Rotationsposition durch den magnetischen Sensor gemessen wird, vom Einstellelement für den Benutzer verschieden. Gemäß einer weiteren bevorzugten Ausführungsform ist das Stellelement in Form eines Verstellstiftes mechanisch an ein vom Benutzer manuell zu betätigendes Einstellelement, zum Beispiel in Form eines Verstellringes, angekoppelt, und der magnetische Rotationspositionssensor misst direkt am Verstellstift oder an einem damit fest verbundenen weiteren Bauteil die Rotationsposition des Stellelements, indem ein bipolarer Magnet auf der Achse des Verstellstiftes mit Polen in radialer Richtung angeordnet ist (vorzugsweise auf der dem Lagerelement abgewandten Seite am Kopfende), und axial über dem bipolaren Magneten der Rotationspositionssensor angeordnet ist. Es zeigt sich, dass die durch diese Konstruktion auftretenden Unterschiede im Abstand zwischen dem stationären magnetischen Rotationspositionssensor und dem auf dem drehenden Teil angeordneten Magneten so gering sind, dass sie die Messgenauigkeit des Sensors nicht beeinflussen.

Das Stellelement kann vorzugsweise in Form eines Verstellstiftes mechanisch an ein vom Benutzer manuell zu betätigendes Einstellelement, in Form eines Verstellringes, angekoppelt sein, und der magnetische Rotationspositionssensor kann indirekt an einem mechanisch an das Stellelement angekoppelten, vom Einstellelement für den Benutzer verschiedenen Drehelement , dessen Rotation an die Rotation des Stellelements gekoppelt ist und im Rahmen des Verstellbereichs seinerseits eine maximale Rotation von weniger als 360° vollzieht, die Rotationsposition messen. Dabei liegen die Verhältnisse der Rotation des Drehelements zur Rotation des Verstellstiftes im Bereich von 1.5:1-1:1.5, vorzugsweise im Bereich von 1.1:1-1:1.1, insbesondere im Bereich von 1:1. Vorzugsweise sind nicht mehr als zwei Übersetzungsstufen zwischen dem Verstellstift und dem Drehelement vorgesehen.

Eine weitere bevorzugte Ausführungsform der hier vorgeschlagenen Kaffeemühle ist dadurch gekennzeichnet, dass auf dem Verstellstift ein Zahnrad angeordnet ist, welches über eine Außenzahung an ein Übersetzungszahnrad mit Außenzahnung angekoppelt ist (wobei vorzugsweise das Zahnrad und das Übersetzungszahnrad im Wesentlichen den gleichen Durchmesser aufweisen), und der bipolare Magnet im Übersetzungszahnrad auf dessen Achse vorgesehen oder eingelassen ist oder das Übersetzungszahnrad über eine weitere Übersetzungsstufe, entweder ein weiteres Zahnrad oder eine Riemenkonstruktion, an ein zusätzliches Drehelement angekoppelt ist, dessen Rotation damit ebenfalls an die Rotation des Stellelements gekoppelt ist und im Rahmen des Verstellbereichs eine maximale Rotation von weniger als 360° vollzieht, und der bipolare Magnet in diesem zusätzlichen Drehelement auf dessen Achse vorgesehen oder eingelassen ist.

Die Kaffeemühle kann zusätzlich eine Meßzelle für die Gewichtsmessung des gemahlenen und in einen Filterhalter effektiv eingefügten gemahlenen Kaffees aufweisen, wobei diese Meßzelle vorzugsweise in einem außerhalb des Gehäuses angeordneten Fuß der Kaffeemühle angeordnet ist.

Die Kaffeemühle weist zusätzlich ein Display auf, und die absolute Rotationsposition vom magnetischen Rotationspositionssensor wird weiter bevorzugt an eine zentrale Steuerung übermittelt und diese Steuerung korreliert die absolute Rotationsposition mit dem Abstand im Sinne der Spaltweite zwischen den Mahlelementen und bereitet diese Informationen für die Ausgabe auf dem Display oder für eine weitergehende Steuerung respektive Regelung auf.

Auf dem Display wird beispielsweise der Istwert der Rotationsposition oder der Spaltweite und der für den gewünschten Mahlgrad erforderliche Sollwert dargestellt, und/oder eine Instruktion, ein vom Benutzer manuell zu betätigendes Einstellelement in eine bestimmte Richtung manuell zu verändern, bis der Zielwert erreicht wird. Dabei sind vorzugsweise zusätzlich optische und/oder akustische und/oder mechanische Rückmeldungselemente vorgesehen, die dem Benutzer anzeigen, ob der Sollwert erreicht ist.

Es kann aber auch Antrieb (zum Beispiel kleiner Elektromotor) vorhanden sein, welcher auf Basis der Messung der absoluten Rotationsposition des Stellelements in geregelter Weise das Stellelement automatisch in die Rotationsposition bringt, welche einen vom Benutzer gewählten und/oder automatisch bestimmten Mahlgrad entspricht, gegebenenfalls in Kombination mit Messwerten einer zusätzlich vorgesehenen Meßzelle die Gewichtsmessung des gemahlenen Kaffees.

Des Weiteren betrifft die vorliegende Erfindung ein Verfahren zum Betrieb einer Kaffeemühle nach einem der vorhergehenden Ansprüche. Das vorgeschlagene Verfahren ist insbesondere dadurch gekennzeichnet, dass die Kaffeemühle wenigstens ein Display aufweist, auf welchem der Istwert der Rotationsposition oder der Spaltweite und der für den gewünschten Mahlgrad erforderliche Sollwert dargestellt wird, und/oder wenigstens eine Instruktion, ein vom Benutzer manuell zu betätigendes Einstellelement in eine bestimmte Richtung manuell zu verändern, bis der Zielwert erreicht wird. Diese Anzeige wird vorzugsweise dynamisch verändert, während der Benutzer das Einstellelement manipuliert, bis der gewünschte Zielwert erreicht ist, und es können weiter vorzugsweise zusätzlich optische und/oder akustische und/oder mechanische Rückmeldungselemente vorgesehen sein, die dem Benutzer anzeigen, ob der Sollwert erreicht ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Kaffeemühle in schematischen Ansichten gemäß einer ersten Ausführungsform, wobei in a) eine schematische Seitenansicht dargestellt ist, in b) eine Aufsicht auf die Sensor-Anordnung und in c) eine Seitenansicht auf die Sensor-Anordnung;
- Fig. 2: eine Kaffeemühle in einer schematischen Seitenansicht gemäß einer zweiten Ausführungsform.

### BESCHREIBUNG BEVORZUGTER AUSFÜHRUNGSFORMEN

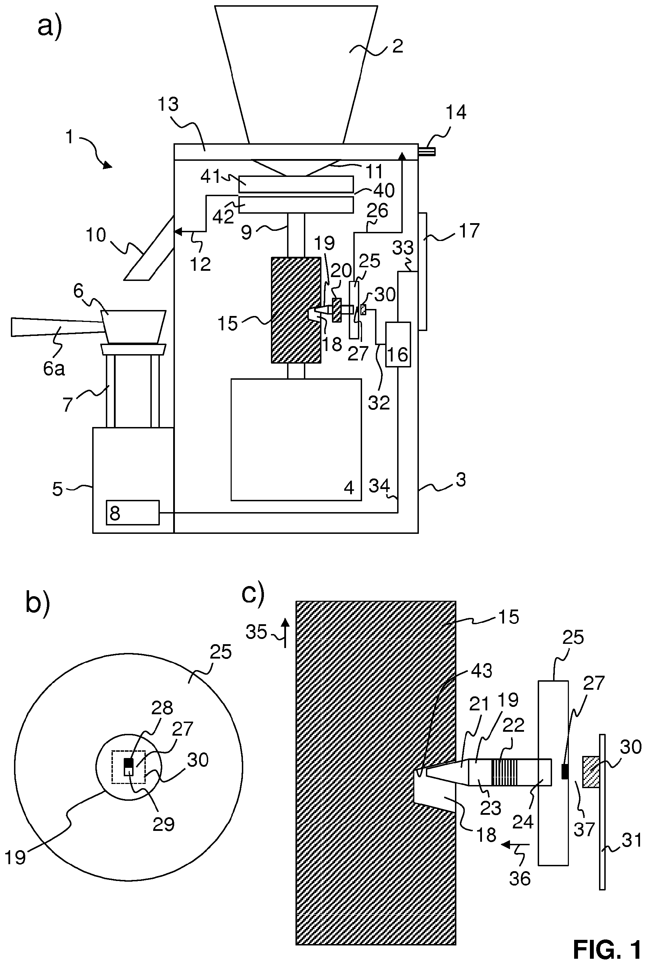

In Figur 1a ist eine Kaffeemühle 1 in einer schematischen Darstellung wiedergegeben, bei welcher die erfindungsgemässe Sensorik eingebaut ist.

Es handelt sich grundsätzlich um eine übliche Kaffeemaschine mit folgenden Elementen: In einem Gehäuse 3 sind zwei Mahlringe 41 und 42 mit vertikaler Rotationsachse im oberen Teil angeordnet. Üblicherweise ist der obere Mahlring 41 stationär und wird über einen oberhalb des Gehäuses angeordneten Trichter 2, der mit Bohnen gefüllt ist, von oben mit Bohnen beaufschlagt. Hier sehr schematisch dargestellt gibt es zwischen den beiden Mahlringen 41 und 42 einen Mahlspalt 40, in welchem die Bohnen zwischen den Konturen der beiden Ringe auf das gewünschte Mass heruntergemahlen werden. Der erforderliche Mahlgrad ist abhängig vom gewünschten Kaffeetyp etc. und der Mahlgrad wird eingestellt durch die Weite des Mahlspalts 40. Darauf wird zurückzukommen sein. Der gemahlene Kaffee wird anschliessend über eine schematisch dargestellte Zuleitung 12 radial oder auch axial aus dem Mahlspalt 40 geführt und zu einem Auslass 10 geleitet. Durch diesen Auslass 10 fällt der Kaffee in der Regel aufgrund der Gewichtskraft in einen Filterhalter 6, dieser Filterhalter 6 verfügt typischerweise über einen Griff 6a und ist dazu vorgesehen, mit einem Bajonettverschluss auf der Unterseite einer Kaffee- oder Espressomaschine angedockt zu werden für den eigentlichen Brühprozess.

Der Filterhalter 6 steht beim hier dargestellten Ausführungsbeispiel auf einem Filterträger 7, der auf einem Fuss 5 der Kaffeemühle steht. Alternativ ist es möglich, dass ein solcher Filterträger vom Gehäuse 3 horizontal absteht und quasi gabelförmig den Filterhalter für die Befüllung aufnimmt.

Beim hier dargestellten Ausführungsbeispiel gibt es im genannten Fuss 5 eine Messzelle 8 für die Gewichtsmessung des in den Filterhalter 6 eingefüllten Kaffees. Eine solche Gewichtsmessung ist an sich bekannt und kann dazu verwendet werden, eine bessere und gleichbleibende Qualität des gebrühten Kaffees zu gewährleisten. Das erforderliche Gewicht kann in Abhängigkeit der gewünschten Einstellungen respektive des gewünschten Kaffees individuell eingestellt werden.

Bei der hier dargestellten Bauweise sind die beiden Mahlringe 41/42 beide mit ihrer Achse vertikal angeordnet, der obere Mahlring 41 ist stationär und der untere Mahlring 42 ist drehbar gelagert. Der untere Mahlring 42 wird angetrieben durch einen hier schematisch dargestellten im unteren Bereich des Gehäuses angeordneten Motor 4. Dieser Motor treibt eine Welle 9 an, die mit dem unteren Mahlring 42 fest verbunden ist, und in wenigstens einem Lagerring 15 gelagert ist. Die axiale Position der Welle 9 und damit auch des unteren Mahlrings 42 wird bestimmt durch die axiale Position dieses Lagerrings 15. Wird entsprechend der Lagerring 15 nach oben geschoben, so verringert sich die Weite des Mahlspalts 40. Dabei kann der Motor 4 selber entweder mitbewegt werden oder es ist auch möglich, dass die Welle 9 im Motor in axialer Richtung über den erforderlichen Bereich etwas verschieblich gelagert ist.

Wie oben erwähnt ist der Mahlgrad entscheidend für den gewünschten Kaffee. Deswegen ist ein Mechanismus vorgesehen, mit welchem dieser Mahlgrad den Bedürfnissen entsprechend individuell für jeden Mahlgang eingestellt werden kann.

Zu diesem Zweck gibt es im Lagerring 15 beim hier dargestellten Ausführungsbeispiel eine konische Vertiefung 18 mit einer den Mahlringen zugewandten insbesondere in Figur 1c ersichtlichen schrägen Flanke 43. In die konische Vertiefung 18 greift ein horizontal in einem Lager 20 gelagerten Verstellstift 19 ein. Der Verstellstift 19 verfügt über ein Aussengewinde 22, das in einem entsprechenden Innengewinde im Lager 20 läuft. Zudem verfügt der Verstellstift 19 über eine korrespondierend zur schrägen Flanke 43 konisch zulaufenden Spitze 21. Auf der der Spitze 21 abgewandten Seite verfügt der Verstelltstift 19 beim hier dargestellten Ausführungsbeispiel über einen Vierkantabschnitt 24, der seinerseits in ein Zahnrad 25 axial eingreift. Dort gibt es eine entsprechende Vierkantausnehmung in diesem Spritzgussteil 25, und das Zahnrad 25 verfügt auf der umlaufenden Peripherie über eine Zahnung.

Rein mechanisch wird nun die Verstellung des Mahlspalts 40 so vorgenommen, dass dieses Zahnrad 25 über eine in den Figuren schematisch dargestellte mehrfach übersetzte mechanische Ankopplung 26 an einen Verstellring 13 im Deckelbereich des Gehäuses 3 angekoppelt wird. Dort gibt es in der Regel am Gehäuse eine Mahlgrad-Skala, und beispielsweise einen für die Manipulation vorgesehenen Flügel 14, und wenn man an diesem Verstellring 13 oder Verstelldeckel an diesem Flügel 14 durch Rotation des Rings den Flügel 14 auf eine bestimmte Skalenposition bringt, dann dreht sich nicht nur der Deckel, sondern durch die mechanische Kopplung 26 auch das Zahnrad 25. Durch Drehung an diesem Zahnrad 25 wird der Verstellstift 19 über das Gewinde 22 im Lager 20 für eine Verengung des Mahlspalts 40 in der in Figur 1 dargestellten Wiedergabe durch die Drehung axial nach links tiefer in die konische Vertiefung 18 hineingeschoben. Dabei gleitet die konische zulaufende Spitze 21 drehend an der schrägen Flanke 43 und verschiebt dabei den Lagerring 15 ganz kontrolliert nach oben. Dadurch schliesst sich der Mahlspalt 40.

Um den Mahlspalt wieder zu öffnen wird entsprechend am Verstellring 13 in die entgegengesetzte Richtung gedreht, und in Folge der Gewichtskraft oder unter der Wirkung einer Rückstellfeder an der Motorenwelle öffnet sich dann der Mahlspalt wieder. Eine Rückstellfeder ist dazu nicht unbedingt nötig, denn die Gewichtskraft von Motor 4, Welle 9 und Lagerring 15 sind in der Regel so gross, dass es keine separate Rückstellkraft für die Öffnung des Mahlspalts 40 braucht, sie kann aber sicherheitshalber vorgesehen werden.

Problematisch an derartigen Konstruktionen ist vor allem, dass die mechanische Kopplung über das Zahnrad 25 und die mechanische Ankopplungskette 26 an den Verstellring 13 naturgemäss erhebliches Spiel aufweist, und vor allem über eine ausgedehnte Benutzungsdauer zunehmend zu Offsets und Spiel neigt. Dadurch wird die für einen verlässlichen Kaffee erforderliche Genauigkeit des Mahlgrads in einem nicht akzeptablen Masse eingeschränkt.

Erfindungsgemäss wird nun direkt am eigentlichen axialen Verstellmechanismus, der die Spaltweite 40 bestimmt, ein magnetischer Sensor vorgesehen. Ein Magnet 27 wird auf der dem Verstellstift 19 abgewandten Seite axial im Zahnrad 25 eingelassen oder aufgesetzt. Nord- und Südpol sind auf verschiedenen radialen Seiten angeordnet, und quasi darüber wird stationär ein Magnetsensor 30 vorgesehen. Der Magnetsensor 30 ist ein programmierbarer magnetischer 360° Winkelsensor für die kontaktlose hochaufgelöste Winkelpositionsmessung und ist typischerweise auf Basis der magnetischen Circular Vertical Hall (CVH) Technologie aufgebaut. Es handelt sich um ein IC, das bevorzugt eine hohe Winkel refresh rate im Bereich von 25 - 3200 Mikrosekunden aufweist, und dessen Nullposition kalibriert werden kann.

Bevorzugterweise werden als Magnete 27 diametral magnetisierte Scheibenmagneten verwendet.

Derartige Sensoren sind im Wesentlichen in ihrer Messung unabhängig von der Spaltweite 37 zwischen der dem Magneten 27 zugewandten Messfläche des Magnetsensors 30 und dem eigentlichen Magneten 27, das heisst der Spalt 37 hat im Rahmen der hier relevanten Dimensionen von maximal 1.5 mm axialer Verschiebung des Zahnrads 25 über den gesamten Verstellbereich des Mahlspalts keinen wesentlichen Einfluss.

Es handelt sich beim Sensor beispielsweise um einen Sensor des Typs wie erhältlich von Allegro Microsystems unter der Bezeichnung A1330.

Die Fehlertoleranz eines solchen Sensors liegt typischerweise im Bereich von höchstens 1.5°, normalerweise im Bereich +/- 0.4 bis +/- 1.1°. Dadurch ergibt sich eine sehr hohe Genauigkeit der Messung für den Mahlgrad, da über das Gewinde 22 eine Rotation von weniger als 360° umgesetzt wird auf eine Translation in axialer Richtung des Lagerrings 15 von typischerweise im Bereich von 1 - 2 mm. Entsprechend handelt es sich beim Gewinde 22 beispielsweise um ein Feingewinde mit einer Steigung von 2 mm.

Wie in einer Aufsicht gemäss Figur 1b erkennbar ist, wird der Sensor 30 (hier schematisch gestrichelt angedeutet), möglichst axial symmetrisch auf dem Magneten 27 angeordnet, und diese beiden Elemente sind koaxial mit dem hier schematisch angedeuteten Umfang des Verstellstiftes 19 und dem Zahnrad 25 angeordnet. Wird nun eben, wie das in Figur 1 durch die Pfeile 35 und 36 angedeutet ist, am Zahnrad 25 über eine entsprechende Manipulation am Verstellring 13 gedreht, so wird der Verstellstift 19 weiter in die konische Vertiefung 18 hineingeschoben und durch das Gleiten der Flanke 21 an der Flanke 43 wird der Lagerring 15 in der mit dem Pfeil 35 dargestellten Richtung nach oben unter Verjüngung des Mahlspaltes 40 verschoben.

Das Signal des Magnetsensors 30 wird über eine Datenleitung 32 an eine zentrale Steuerung 16 übermittelt. Diese zentrale Steuerung 16 kann, wenn zusätzlich das Mahlgut gewogen wird, auch noch die Daten der Wägezelle 8 über eine entsprechende weitere Datenleitung 34 aufnehmen. Die zentrale Steuerung 16, die mit Strom über eine entsprechende Hauptversorgungsleitung, die auch den Motor speist, und hier nicht dargestellt ist, mit Energie versehen ist, steuert dann anschliessend ein Display 17 an.

An diesem Display 17 wird dem Benutzer u.a. angezeigt, in welcher absoluten Spaltposition er sich gerade befindet. Der Benutzer kann beispielsweise den gewünschten Mahlgrad an diesem Display einstellen, und erhält dann Instruktionen, in welche Richtung der Verstellstift gedreht werden muss, um den Mahlgrad auf den gewünschten Wert einzustellen. Das ist beispielweise möglich, indem der Sollwert und der über den Sensor 30 gemessene Ist-Wert nebeneinander auf dem Display angezeigt werden und dem Benutzer ein akustisches und/oder optisches Feedback gegeben wird, wenn diese beiden Werte nach Verstellung über dem Flügel 14 übereinstimmend sind.

Eine automatische Kalibrierung kann erreicht werden, indem automatisch beim Erreichen des Anschlags der Wert von null eingestellt wird, oder bei Erreichen des Anschlags der Benutzer aufgefordert wird, beim Display eine entsprechende Routine für die Kalibrierung auszulösen.

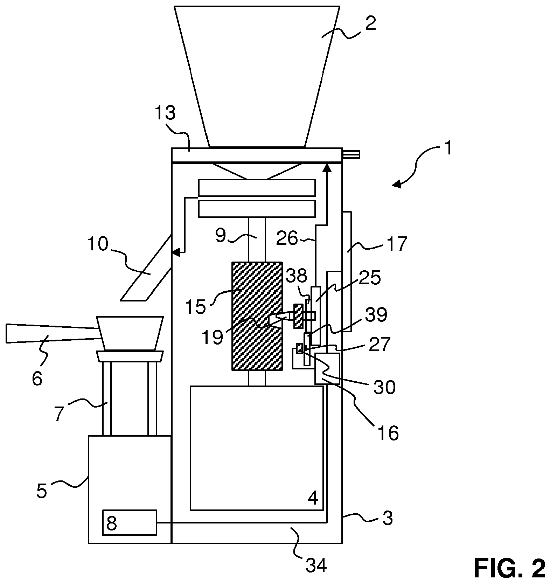

Eine alternative Bauweise bei knappen Platzverhältnissen ist beim Ausführungsbeispiel in Figur 2 dargestellt. Hier ist es nicht möglich, den Magnetsensor 30 direkt auf der dem Verstellstift 19 abgewandten Seite des Zahnrads 25 anzuordnen. In einer solchen Situation, beispielsweise wegen eines schmaleren Gehäuses, ist es dann möglich, auf der dem Verstellstift zugewandten Seite des Zahnrades 25 ein weiteres aufgesetztes Zahnrad 38 anzuordnen, und dieses an ein Übersetzungszahnrad 39 anzukoppeln. Dieses Übersetzungszahnrad verfügt nun seinerseits über eine axiale Ausnehmung in welcher der bereits beschriebene Magnet 27 eingelassen ist, und der Magnetsensor wird nun auf der im Lagerring 15 zugewandten Seite zugeordnet. Anstelle des Zahnrades kann auch ein Übertragungsriemen Anwendung finden, weiter ist es möglich, zusätzlich zu den beiden hier dargestellten Zahnrädern 38 und 39 eine weitere Riemenübertragung bis zum eigentlichen Drehelement als Träger für den Magneten 27 vorzusehen. Es sollte aber nicht mehr als zwei derartige Übersetzungen geben.

Alternativ ist es möglich, auf ein derartiges zusätzliches Übersetzungszahnrad 39 und ein aufgesetztes Zahnrad 38 zu verzichten, und ein direktes weiteres Zahnrad an das Zahnrad 25 anzukoppeln. Dabei ist aber darauf zu achten, dass eben die Rotationsverhältnisse unter Kontrolle gehalten werden. Es sollte keine Rotation von mehr als 360° für den Sensor geben, da ansonsten der Magnetsensor 30 nach Umlaufen einer Periode nicht mehr in einem definierten Zustand ist. Deswegen sind Lösungen bevorzugt, bei welchen eine 1:1 Übersetzung über wie hier dargestellt über zwei Zahnräder 38 oder 39 möglichst direkt am Verstellstift angekoppelt sind oder sonst muss dann bei direkter Ankopplung an die Zahnung des Zahnrads 25 damit gelebt werden, dass ein weiteres Zahnrad im Sinne des Zahnrads 39 das direkt an 25 angreift, einen relativ grossen Radius, im Bereich des Radius des Zahnrades 25, aufweisen muss.

**BEZUGSZEICHENLISTE**

| | | | |
|---|---|---|---|
| 1 | Kaffeemühle | | Gewichtsmessung |
| 2 | Trichter für Bohnen | 9 | Welle |
| 3 | Gehäuse | 10 | Auslass |
| 4 | Motor | 11 | Zuführung |
| 5 | Fuß | 12 | Mahlgutzuleitung |
| 6 | Filterhalter | 13 | Verstellring |
| 6a | Griff von 6 | 14 | Flügel |
| 7 | Filterträger | 15 | Lagerring |
| 8 | Meßzelle für | 16 | zentrale Steuerung |
| 17 | Display | 32 | Verbindung zwischen 16 und 30 |
| 18 | konische Vertiefung in 15 | | |
| 19 | Verstellstift | 33 | Verbindung zwischen 16 und 17 |
| 20 | Lager für Verstellstift | | |
| 21 | konisch zulaufende Spitze von 19 | 34 | Verbindung zwischen 8 und 16 |
| 22 | Gewinde von 19 | 35 | Verschiebungsrichtung von 15 |
| 23 | zylindrischer Abschnitt von 19 | | |
| | | 36 | Verschiebungsrichtung von 19 |
| 24 | Vierkant-Abschnitt von 19 | | |
| 25 | Zahnrad | 37 | Abstand zwischen Sensor-Vorderseite und 27 |
| 26 | mechanische Ankopplung von 25 an 13 | | |
| | | 38 | aufgesetztes Zahnrad |
| 27 | Magnet | 39 | Übersetzungszahnrad |
| 28 | Nordpol von 27 | 40 | Mahlspalt |
| 29 | Südpol von 27 | 41 | oberer Mahlring |
| 30 | Magnetsensor | 42 | unterer Mahlring |
| 31 | Träger für 30 | 43 | schräge Flanke an 18 |

## Patentansprüche

1. Kaffeemühle (1) für das Mahlen von Kaffeebohnen zu gemahlenem Kaffee mit wenigstens einem Behälter (2) oder Zuführungselement für Kaffeebohnen und wenigstens einer Mahlvorrichtung (4, 9, 41, 42) zum Mahlen der Kaffeebohnen,
wobei die Mahlvorrichtung wenigstens ein erstes und ein zweites Mahlelement (41,42) aufweist, zwischen welchen die Kaffeebohnen durch relative Rotation der beiden Mahlelemente (41,42) gemahlen werden, wobei der Abstand (40) der beiden Mahlelemente im Mahlprozess den Mahlgrad des gemahlenen Kaffees bestimmt, und wobei wenigstens ein Mahlelement (42) durch einen Motor (4) angetrieben wird,
wobei ein Stellelement (19) vorgesehen ist, mit welchem durch Rotation des Stellelements (19) der Abstand (40) der beiden Mahlelemente (41,42) eingestellt werden kann,
wobei ein magnetischer Rotationspositionssensor (30) vorgesehen ist, welcher die absolute Rotationsposition dieses Stellelements (19) als Maß des Abstandes (40) eindeutig direkt oder indirekt bestimmt und für die weitere Steuerung der Kaffeemühle (1) bereitstellt
wobei ein erstes Mahlelement (41) stationär vorgesehen ist und ein zweites Mahlelement (42) drehbar gelagert ist, und im Mahlvorgang gegenüber dem ersten Mahlelement (41) rotiert, und das zweite Mahlelement (42) mit einer Welle (9) verbunden und über diese Welle (9) vom Motor (4) angetrieben wird
wobei die Welle (9) in wenigstens einem Lagerelement gelagert ist, und wenigstens eines dieser Lagerelemente (15) verschieblich gelagert ist und die Welle (9) in diesem Lagerelement (15) axial gekoppelt gelagert ist, sodass eine Verschiebung des Lagerelements (15) in axialer Richtung eine entsprechende Verschiebung der Welle in der gleichen axialen Richtung bewirkt
**dadurch gekennzeichnet, dass**
das Stellelement (19) in Form eines Verstellstiftes (19) ausgebildet und mit dem Lagerelement (15) gekoppelt ist, wobei der Verstellstift (19) derart gelagert ist, dass eine Rotation des Verstellstiftes (19) zu gleichzeitiger axialer Verschiebung des Lagerelements (15) führt
und dass der Verstellstift (19) über ein Gewinde (23) gelagert ist und mit seiner Spitze (21) in eine Kulisse (18,43) im oder am Lagerelement (15) angreift und eine axiale Verschiebung des Verstellstiftes (19) die axiale Verschiebung des Lagerelements (15) bewirkt.

2. Kaffeemühle (1) nach Anspruch 1, **dadurch gekennzeichnet, dass** das erste Mahlelement (41) in Form eines Mahlringes oder Mahlkegels ausgebildet ist.

3. Kaffeemühle (1) nach einem der vorhergehenden Ansprüche, **dadurch gekennzeichnet, dass** das zweite Mahlelement (42) in Form eines Mahlringes, einer Mahlscheibe oder Mahlkegels ausgebildet ist.

4. Kaffeemühle (1) nach einem der vorhergehenden Ansprüche, **dadurch gekennzeichnet, dass** das Lagerelement ein Lagerring (15) ist.

5. Kaffeemühle (1) nach einem der vorhergehenden Ansprüche, **dadurch gekennzeichnet, dass** die Spitze (21) des Verstellstifts (19) konisch zulaufend ausgebildet ist, und die Kulisse (18) in Form wenigstens einer schrägen Flanke (43), vorzugsweise in einer Ausnehmung des Lagerelements (15), ausgebildet ist.

6. Kaffeemühle (1) nach einem der vorhergehenden Ansprüche, **dadurch gekennzeichnet, dass** das Stellelement (19) in Form eines Verstellstiftes, mechanisch an ein vom Benutzer manuell zu betätigendes Einstellelement (13,14), vorzugsweise in Form eines Verstellringes (13), angekoppelt ist, und der magnetische Rotationspositionssensor (30) direkt am Stellelement (19) oder
an einem damit fest verbundenen weiteren Bauteil (25) die Rotationsposition des Stellelements (19) direkt misst,
oder indirekt an einem mechanisch an das Stellelement (19) angekoppelten, vom Einstellelement (13,14) für den Benutzer verschiedenen Drehelement (39), dessen Rotation an die Rotation des Stellelements (19) gekoppelt ist und im Rahmen des Verstellbereichs seinerseits eine maximale Rotation von weniger als 360° vollzieht.

7. Kaffeemühle (1) nach einem der vorhergehenden Ansprüche, **dadurch gekennzeichnet, dass** ein erstes Mahlelement (41), vorzugsweise in Form eines Mahlringes, einer Mahlscheibe oder Mahlkegels, stationär, vorzugsweise an einem Festscheibenflansch, vorgesehen ist und ein zweites Mahlelement (42), vorzugsweise in Form eines Mahlringes, einer Mahlscheibe oder Mahlkegels, vorzugsweise an einem Laufscheibenflansch, drehbar gelagert ist, und im Mahlvorgang gegenüber dem ersten Mahlelement (41) rotiert, und dass das zweite Mahlelement (42) mit einer Welle (9) verbunden und über diese Welle (9) vom Motor (4) angetrieben wird, und dass die Welle in eine vom zweiten Mahlelement (42) entfernende Richtung vorgespannt ist, vorzugsweise mit einer Spiralfeder, die insbesondere auf der dem zweiten Mahlelement (42) abgewandten Seite des Motors (4) angeordnet ist.

8. Kaffeemühle (1) nach einem der vorhergehenden Ansprüche, **dadurch gekennzeichnet, dass** das Stellelement (19) in Form eines Verstellstiftes mechanisch an ein vom Benutzer manuell zu betätigendes Einstellelement (13,14), in Form eines Verstellringes (13), angekoppelt ist, und der magnetische Rotationspositionssensor (30) direkt am Verstellstift (19) oder an einem damit fest verbundenen weiteren Bauteil (25) die Rotationsposition des Stellelements (19) direkt misst, indem ein bipolarer Magnet (27) auf der Achse des Verstellstiftes (19) mit Polen in radialer Richtung angeordnet ist, vorzugsweise auf der dem Lagerelement (15) abgewandten Seite, und axial über dem bipolaren Magneten (27) der Rotationspositionssensor (30) angeordnet ist.

9. Kaffeemühle (1) nach einem der vorhergehenden Ansprüche 1-7, **dadurch gekennzeichnet, dass** das Stellelement (19) in Form eines Verstellstiftes mechanisch an ein vom Benutzer manuell zu betätigendes Einstellelement (13,14), in Form eines Verstellringes (13), angekoppelt ist, und der magnetische Rotationspositionssensor (30) indirekt an einem mechanisch an das Stellelement (19) angekoppelten, vom Einstellelement (13,14) für den Benutzer verschiedenen Drehelement (39), dessen Rotation an die Rotation des Stellelements (19) gekoppelt ist und im Rahmen des Verstellbereichs seinerseits eine maximale Rotation von weniger als 360° vollzieht, die Rotationsposition misst,
wobei die Verhältnisse der Rotation des Drehelements (39) zur Rotation des Verstellstiftes (19) im Bereich von 1.5:1-1:1.5 liegen, vorzugsweise im Bereich von 1.1:1-1:1.1, insbesondere im Bereich von 1:1, und wobei vorzugsweise nicht mehr als zwei Übersetzungsstufen zwischen dem Verstellstift (19) und dem Drehelement (39) vorgesehen sind.

10. Kaffeemühle (1) nach Anspruch 9, **dadurch gekennzeichnet, dass** auf dem Verstellstift (19) ein Zahnrad (38) angeordnet ist, welches über eine Außenzahnung an ein Übersetzungszahnrad (39) mit Außenzahnung angekoppelt ist, wobei vorzugsweise das Zahnrad (38) und das Übersetzungszahnrad (39) im Wesentlichen den gleichen Durchmesser aufweisen, und der bipolare Magnet (27) im Übersetzungszahnrad (39) auf dessen Achse vorgesehen oder eingelassen ist oder das Übersetzungszahnrad (39) über eine weitere Übersetzungsstufe, entweder ein weiteres Zahnrad oder eine Riemenkonstruktion, an ein zusätzliches Drehelement angekoppelt ist, dessen Rotation damit ebenfalls an die Rotation des Stellelements (19) gekoppelt ist und im Rahmen des Verstellbereichs eine maximale Rotation von weniger als 360° vollzieht, und der bipolare Magnet (27) in diesem zusätzlichen Drehelement auf dessen Achse vorgesehen oder eingelassen ist.

11. Kaffeemühle (1) nach einem der vorhergehenden Ansprüche, **dadurch gekennzeichnet, dass** die Kaffeemühle zusätzlich eine Meßzelle (8) für die Gewichtsmessung des gemahlenen und in einen Filterhalter (6) effektiv eingefügten gemahlenen Kaffees aufweist, wobei diese Meßzelle (8) vorzugsweise in einem außerhalb eines weiterhin vorgesehenen Gehäuses (3) angeordneten Fußes (5) der Kaffeemühle angeordnet ist.

12. Kaffeemühle (1) nach einem der vorhergehenden Ansprüche, **dadurch gekennzeichnet, dass** die Kaffeemühle zusätzlich ein Display (17) aufweist, und dass die Kaffeemühle (1) derart ausgebildet ist, dass die absolute Rotationsposition vom magnetischen Rotationspositionssensor (30) an eine zentrale Steuerung (16) übermittelt wird, und diese Steuerung (16) die absolute Rotationsposition mit dem Abstand im Sinne der Spaltweite (40) zwischen den Mahlelementen (41,42) korreliert und für die Ausgabe auf dem Display (17) aufbereitet.

13. Kaffeemühle (1) nach Anspruch 12, **dadurch gekennzeichnet, dass** das Display (17) derart ausgebildet ist, dass auf dem Display (17) der Istwert der Rotationsposition oder der Spaltweite (40) und der für den gewünschten Mahlgrad erforderliche Sollwert dargestellt werden kann, und/oder eine Instruktion, ein vom Benutzer manuell zu betätigendes Einstellelement (13,14) in eine bestimmte Richtung manuell zu verändern, bis der Zielwert erreicht wird,
wobei vorzugsweise zusätzlich optische und/oder akustische und/oder mechanische Rückmeldungselemente vorgesehen sind, die dem Benutzer anzeigen, ob der Sollwert erreicht ist.

14. Kaffeemühle (1) nach einem der vorhergehenden Ansprüche, **dadurch gekennzeichnet, dass** ein Antrieb vorhanden ist, welcher auf Basis der Messung der absoluten Rotationsposition des Stellelements (19) in geregelter Weise das Stellelement (19) automatisch in die Rotationsposition bringt, welche einen vom Benutzer gewählten und/oder automatisch bestimmten Mahlgrad entspricht, gegebenenfalls in Kombination mit Messwerten einer zusätzlich vorgesehenen Meßzelle (8) die Gewichtsmessung des gemahlenen Kaffees.

15. Verfahren zum Betrieb einer Kaffeemühle (1) nach einem der vorhergehenden Ansprüche,
**dadurch gekennzeichnet, dass**
die Kaffeemühle (1) wenigstens ein Display (17) aufweist, auf welchem der Istwert der Rotationsposition oder der Spaltweite (40) und der für den gewünschten Mahlgrad erforderliche Sollwert dargestellt wird,
oder eine Instruktion, ein vom Benutzer manuell zu betätigendes Einstellelement (13,14) in eine bestimmte Richtung manuell zu verändern, bis der Zielwert erreicht wird, und wobei diese Anzeige vorzugsweise dynamisch verändert wird, während der Benutzer das Einstellelement (13,14) manipuliert, bis der gewünschte Zielwert erreicht ist, und wobei vorzugsweise zusätzlich optische, akustische oder mechanische Rückmeldungselemente oder eine Kombination davon vorgesehen sind, die dem Benutzer anzeigen, ob der Sollwert erreicht ist.

## Claims

1. Coffee grinder (1) for grinding coffee beans into ground coffee, comprising at least one container (2) or feed element for coffee beans and at least one grinding device (4, 9, 41, 42) for grinding the coffee beans,
wherein the grinding device comprises at least a first and a second grinding element (41, 42), between which the coffee beans are ground by relative rotation of the two grinding elements (41, 42), wherein the distance (40) between the two grinding elements in the grinding process determines the degree of grinding of the ground coffee, and wherein at least one grinding element (42) is driven by a motor (4)
wherein an adjusting element (19) is provided, with which the distance (40) of the two grinding elements (41, 42) can be adjusted by rotation of the adjusting element (19),
wherein a magnetic rotation position sensor (30) is provided, which unambiguously directly or indirectly determines the absolute rotation position of this adjusting element (19) as a measure of the distance (40) and provides it for the further control of the coffee mill (1)
wherein a first grinding element (41) is provided in a stationary manner and a second grinding element (42) is rotatably mounted and rotates relative to the first grinding element (41) in the grinding process, and the second grinding element (42) is connected to a shaft (9) and is driven by the motor (4) via this shaft (9)
wherein the shaft (9) is mounted in at least one bearing element, and at least one of these bearing elements (15) is displaceably mounted and the shaft (9) is mounted in this bearing element (15) in an axially coupled manner, so that a displacement of the bearing element (15) in the axial direction causes a corresponding displacement of the shaft in the same axial direction
**characterized in that**
the adjusting element (19) is designed in the form of an adjusting pin (19) and is coupled to the bearing element (15), the adjusting pin (19) being mounted in such a way that a rotation of the adjusting pin (19) leads to simultaneous axial displacement of the bearing element (15)
and **in that** the adjusting pin (19) is mounted via a thread (23) and engages with its tip (21) in a slot (18, 43) in or on the bearing element (15) and an axial displacement of the adjusting pin (19) causes the axial displacement of the bearing element (15)

2. Coffee grinder (1) according to claim 1, **characterized in that** the first grinding element (41) is designed in the form of a grinding ring or grinding cone.

3. Coffee grinder (1) according to one of the preceding claims, **characterized in that** the second grinding element (42) is designed in the form of a grinding ring, a grinding disk or grinding cone.

4. Coffee grinder (1) according to one of the preceding claims, **characterized in that** the bearing element is a bearing ring (15).

5. Coffee grinder (1) according to one of the preceding claims, **characterized in that** the tip (21) of the adjusting pin (19) is designed to be conically tapered, and the sliding block (18) is designed in the form of at least one inclined flank (43), preferably in a recess of the bearing element (15)

6. Coffee grinder (1) according to one of the preceding claims, **characterized in that** the adjusting element (19) in the form of an adjusting pin is mechanically coupled to an adjusting element (13, 14), preferably in the form of an adjusting ring (13), to be manually actuated by the user, and the magnetic rotation position sensor (30) directly measures the rotation position of the adjusting element (19) directly on the adjusting element (19) or
directly at a further component (25) fixedly connected thereto, measures the rotational position of the actuating element (19)
or indirectly at a rotary element (39) mechanically coupled to the actuating element (19) and different from the adjusting element (13, 14) for the user, the rotation of which rotary element is coupled to the rotation of the actuating element (19) and in turn performs a maximum rotation of less than 360° within the adjustment range.

7. Coffee grinder (1) according to one of the preceding claims, **characterized in that** a first grinding element (41), preferably in the form of a grinding ring, a grinding disk or grinding cone, is provided stationary, preferably on a fixed disk flange, and a second grinding element (42), preferably in the form of a grinding ring, a grinding disk or grinding cone, is rotatably mounted, preferably on a running disk flange, and rotates in the grinding process relative to the first grinding element (41), and **in that** the second grinding element (42) is connected to a shaft (9) and is driven by the motor (4) via this shaft (9), and **in that** the shaft is prestressed in a direction away from the second grinding element (42), preferably by means of a spiral spring which is arranged in particular on the side of the motor (4) facing away from the second grinding element (42).

8. Coffee grinder (1) according to one of the preceding claims, **characterized in that** the adjusting element (19) in the form of an adjusting pin is mechanically coupled to an adjusting element (13, 14), in the form of an adjusting ring (13), to be manually actuated by the user, and the magnetic rotation position sensor (30) directly measures the rotation position of the adjusting element (19) directly on the adjusting pin (19) or on a further component (25) fixedly connected thereto, **in that** a bipolar magnet (27) is arranged on the axis of the adjusting pin (19) with poles in the radial direction, preferably on the side facing away from the bearing element (15), and the rotational position sensor (30) is arranged axially above the bipolar magnet (27).

9. Coffee grinder (1) according to one of the preceding claims 1-7, **characterized in that** the adjusting element (19) in the form of an adjusting pin is mechanically coupled to an adjusting element (13, 14), in the form of an adjusting ring (13), to be manually operated by the user, and the magnetic rotation position sensor (30) is indirectly coupled to an adjusting element (13, 14), in the form of an adjusting ring (13), which is mechanically coupled to the adjusting element (19), the adjusting element (13, 14), the rotation of which is coupled to the rotation of the adjusting element (19) and in turn performs a maximum rotation of less than 360° within the adjustment range,
wherein the ratios of the rotation of the rotary element (39) to the rotation of the adjusting pin (19) are in the range of 1.5:1-1:1.5, preferably in the range of 1.1:1-1:1, in particular in the range of 1:1, and wherein preferably not more than two transmission stages are provided between the adjusting pin (19) and the rotary element (39).

10. Coffee grinder (1) according to claim 9, **characterized in that** a gear wheel (38) is arranged on the adjusting pin (19), which gear wheel is coupled via an external toothing to a transmission gear wheel (39) having an external toothing, preferably the gear wheel (38) and the transmission gear wheel (39) having substantially the same diameter, and the bipolar magnet (27) is provided in the transmission gear wheel (39) on the axis thereof or is embedded therein, or the transmission gear wheel (39) is coupled via a further transmission stage, or the transmission gear wheel (39) is coupled via a further transmission stage, either a further gear wheel or a belt construction, to an additional rotary element, the rotation of which is thus also coupled to the rotation of the actuating element (19) and performs a maximum rotation of less than 360° within the adjustment range, and the bipolar magnet (27) is provided or embedded in this additional rotary element on the axis thereof.

11. Coffee grinder (1) according to one of the preceding claims, **characterized in that** the coffee grinder additionally comprises a measuring cell (8) for measuring the weight of the ground coffee effectively inserted into a filter holder (6), this measuring cell (8) preferably being arranged in a base (5) of the coffee grinder which is arranged outside a housing (3) which is further provided.

12. Coffee grinder (1) according to one of the preceding claims, **characterized in that** the coffee grinder additionally has a display (17), and **in that** the coffee grinder (1) is designed in such a way that the absolute rotational position is transmitted from the magnetic rotational position sensor (30) to a central controller (16), and this controller (16) correlates the absolute rotational position with the distance in terms of the gap width (40) between the grinding elements (41, 42) and processes it for output on the display (17).

13. Coffee grinder (1) according to claim 12, **characterized in that** the display (17) is designed in such a way that the actual value of the rotational position or of the gap width (40) and the target value required for the desired degree of grinding can be shown on the display (17), and/or an instruction to manually change an adjustment element (13, 14) to be manually operated by the user in a specific direction until the target value is reached,
wherein optical and/or acoustic and/or mechanical feedback elements are preferably additionally provided, which indicate to the user whether the target value has been reached.

14. Coffee grinder (1) according to one of the preceding claims, **characterized in that** a drive is provided which, on the basis of the measurement of the absolute rotational position of the adjusting element (19), automatically brings the adjusting element (19) in a controlled manner into the rotational position which corresponds to a degree of grinding selected and/or automatically determined by the user, optionally in combination with measured values of an additionally provided measuring cell (8) the weight measurement of the ground coffee.

15. Method of operating a coffee grinder (1) according to one of the preceding claims,
**characterized in that**
the coffee grinder (1) has at least one display (17) on which the actual value of the rotation position or of the gap width (40) and the setpoint value required for the desired degree of grinding are shown,
or an instruction to manually change an adjustment element (13, 14) to be manually operated by the user in a certain direction until the target value is reached, and wherein this display is preferably dynamically changed while the user manipulates the adjustment element (13, 14) until the desired target value is reached, and wherein preferably additionally optical, acoustic or mechanical feedback elements or a combination thereof are provided to indicate to the user whether the target value has been reached.

## Revendications

1. Moulin à café (1) pour moudre des grains de café en café moulu, comprenant au moins un récipient (2) ou élément d'alimentation pour les grains de café et au moins un dispositif de broyage (4, 9, 41, 42) pour moudre les grains de café,
le dispositif de broyage présentant au moins un premier et un deuxième élément de broyage (41, 42) entre lesquels les grains de café sont broyés par rotation relative des deux éléments de broyage (41, 42), la distance (40) entre les deux éléments de broyage dans le processus de broyage déterminant le degré de broyage du café moulu, et au moins un élément de broyage (42) étant entraîné par un moteur (4),
un élément de réglage (19) étant prévu, avec lequel la distance (40) des deux éléments de broyage (41, 42) peut être réglée par rotation de l'élément de réglage (19),
un capteur magnétique de position de rotation (30) étant prévu, lequel détermine de manière univoque, directement ou indirectement, la position de rotation absolue de cet élément de réglage (19) en tant que mesure de la distance (40) et la met à disposition pour la commande ultérieure du moulin à café (1)
un premier élément de broyage (41) étant prévu de manière stationnaire et un deuxième élément de broyage (42) étant logé de manière rotative, et tournant par rapport au premier élément de broyage (41) lors du processus de broyage, et le deuxième élément de broyage (42) étant relié à un arbre (9) et entraîné par le moteur (4) par l'intermédiaire de cet arbre (9)
l'arbre (9) étant logé dans au moins un élément de palier, et au moins un de ces éléments de palier (15) étant logé de manière déplaçable et l'arbre (9) étant logé dans cet élément de palier (15) de manière couplée axialement, de sorte qu'un déplacement de l'élément de palier (15) dans la direction axiale provoque un déplacement correspondant de l'arbre dans la même direction axiale.
**caractérisé en ce que**
l'élément de réglage (19) est réalisé sous la forme d'une tige de réglage (19) et est couplé à l'élément de palier (15), la tige de réglage (19) étant logée de telle sorte qu'une rotation de la tige de réglage (19) entraîne un déplacement axial simultané de l'élément de palier (15).
et **en ce que** la tige de réglage (19) est logée par l'intermédiaire d'un filetage (23) et s'engage avec sa pointe (21) dans une coulisse (18, 43) dans ou sur l'élément de palier (15) et un déplacement axial de la tige de réglage (19) provoque le déplacement axial de l'élément de palier (15).

2. Moulin à café (1) selon la revendication 1, **caractérisé en ce que** le premier élément de broyage (41) est réalisé sous la forme d'un anneau de broyage ou d'un cône de broyage.

3. Moulin à café (1) selon l'une quelconque des revendications précédentes, **caractérisé en ce que** le deuxième élément de broyage (42) est réalisé sous la forme d'un anneau de broyage, d'un disque de broyage ou d'un cône de broyage.

4. Moulin à café (1) selon l'une des revendications précédentes, **caractérisé en ce que** l'élément de palier est une bague de palier (15).

5. Moulin à café (1) selon l'une des revendications précédentes, **caractérisé en ce que** la pointe (21) de la tige de réglage (19) est de forme conique, et la coulisse (18) est réalisée sous la forme d'au moins un flanc incliné (43), de préférence dans un évidement de l'élément de palier (15).

6. Moulin à café (1) selon l'une des revendications précédentes, **caractérisé en ce que** l'élément de réglage (19) sous la forme d'une tige de réglage est couplé mécaniquement à un élément de réglage (13, 14) à actionner manuellement par l'utilisateur, de préférence sous la forme d'une bague de réglage (13), et le capteur magnétique de position de rotation (30) est monté directement sur l'élément de réglage (19) ou sur un autre élément de la structure.
soit directement sur un autre composant (25) solidaire de celui-ci, pour mesurer la position de rotation de l'élément de réglage (19),
soit indirectement sur un élément rotatif (39) couplé mécaniquement à l'élément de réglage (19), différent de l'élément de réglage (13, 14) pour l'utilisateur, dont la rotation est couplée à la rotation de l'élément de réglage (19) et qui effectue de son côté une rotation maximale de moins de 360° dans le cadre de la plage de réglage.

7. Moulin à café (1) selon l'une des revendications précédentes, **caractérisé en ce qu'**un premier élément de broyage (41), de préférence sous la forme d'un anneau de broyage, d'un disque de broyage ou d'un cône de broyage, est prévu de manière stationnaire, de préférence sur une bride de disque fixe, et un deuxième élément de broyage (42), de préférence sous la forme d'un anneau de broyage, d'un disque de broyage ou d'un cône de broyage, est monté de manière rotative, de préférence sur une bride de disque mobile, et tourne par rapport au premier élément de broyage (41) pendant le processus de broyage, et **en ce que** le deuxième élément de broyage (42) est relié à un arbre (9) et est entraîné par le moteur (4) par l'intermédiaire de cet arbre (9), et **en ce que** l'arbre est précontraint dans une direction s'éloignant du deuxième élément de broyage (42), de préférence avec un ressort spiral, qui est disposé en particulier sur le côté du moteur (4) opposé au deuxième élément de broyage (42).

8. Moulin à café (1) selon l'une des revendications précédentes, **caractérisé en ce que** l'élément de réglage (19) sous forme d'une tige de réglage est couplé mécaniquement à un élément de réglage (13, 14) à actionner manuellement par l'utilisateur, sous forme d'une bague de réglage (13), et le capteur magnétique de position de rotation (30) mesure directement la position de rotation de l'élément de réglage (19) sur la tige de réglage (19) ou sur un autre composant (25) solidaire de celle-ci, en disposant un aimant bipolaire (27) sur l'axe de la tige de réglage (19) avec des pôles dans la direction radiale, de préférence sur le côté opposé à l'élément de palier (15), et en disposant le capteur de position de rotation (30) axialement au-dessus de l'aimant bipolaire (27).

9. Moulin à café (1) selon l'une des revendications précédentes 1-7, **caractérisé en ce que** l'élément de réglage (19) est couplé mécaniquement, sous la forme d'une tige de réglage, à un élément de réglage (13, 14) à actionner manuellement par l'utilisateur, sous la forme d'une bague de réglage (13), et le capteur magnétique de position de rotation (30) est couplé indirectement à un élément de réglage (13) couplé mécaniquement à l'élément de réglage (19), (39) différent de l'élément de réglage (13, 14) pour l'utilisateur, dont la rotation est couplée à la rotation de l'élément de réglage (19) et qui effectue de son côté une rotation maximale de moins de 360° dans le cadre de la plage de réglage, mesure la position de rotation,
les rapports de la rotation de l'élément rotatif (39) à la rotation de la tige de réglage (19) se situant dans la plage de 1,5:1-1:1,5, de préférence dans la plage de 1,1:1-1:1,1, en particulier dans la plage de 1:1, et de préférence pas plus de deux niveaux de transmission étant prévus entre la tige de réglage (19) et l'élément rotatif (39).

10. Moulin à café (1) selon la revendication 9, **caractérisé en ce que** sur la tige de réglage (19) est disposée une roue dentée (38) qui est couplée par une denture extérieure à une roue dentée de transmission (39) avec une denture extérieure, la roue dentée (38) et la roue dentée de transmission (39) présentant de préférence sensiblement le même diamètre, et l'aimant bipolaire (27) étant prévu ou encastré dans la roue dentée de transmission (39) sur son axe ou la roue dentée de transmission (39) étant couplée par un autre étage de transmission, soit une autre roue dentée ou une construction à courroie, à un élément rotatif supplémentaire dont la rotation est ainsi également couplée à la rotation de l'élément de réglage (19) et effectue, dans le cadre de la plage de réglage, une rotation maximale de moins de 360°, et l'aimant bipolaire (27) est prévu ou encastré dans cet élément rotatif supplémentaire sur son axe.

11. Moulin à café (1) selon l'une quelconque des revendications précédentes, **caractérisé en ce que** le moulin à café comprend en outre une cellule de mesure (8) pour la mesure du poids du café moulu et effectivement inséré dans un porte-filtre (6), cette cellule de mesure (8) étant de préférence disposée dans un pied (5) du moulin à café disposé à l'extérieur d'un boîtier (3) prévu en outre.

12. Moulin à café (1) selon l'une des revendications précédentes, **caractérisé en ce que** le moulin à café présente en outre un écran (17), et **en ce que** le moulin à café (1) est conçu de telle sorte que la position de rotation absolue est transmise par le capteur magnétique de position de rotation (30) à une commande centrale (16), et cette commande (16) met en corrélation la position de rotation absolue avec la distance au sens de la largeur de fente (40) entre les éléments de broyage (41, 42) et la prépare pour l'édition sur l'écran (17).

13. Moulin à café (1) selon la revendication 12, **caractérisé en ce que** l'écran (17) est conçu de telle sorte que la valeur réelle de la position de rotation ou de la largeur de fente (40) et la valeur de consigne nécessaire pour le degré de mouture souhaité peuvent être représentées sur l'écran (17), et/ou une instruction de modifier manuellement un élément de réglage (13, 14) à actionner manuellement par l'utilisateur dans une direction déterminée, jusqu'à ce que la valeur cible soit atteinte,
des éléments de rétroaction optiques et/ou acoustiques et/ou mécaniques supplémentaires étant de préférence prévus pour indiquer à l'utilisateur si la valeur de consigne est atteinte.

14. Moulin à café (1) selon l'une des revendications précédentes, **caractérisé en ce qu'**il existe un entraînement qui, sur la base de la mesure de la position de rotation absolue de l'élément de réglage (19), amène automatiquement de manière régulée l'élément de réglage (19) dans la position de rotation qui correspond à un degré de mouture choisi par l'utilisateur et/ou déterminé automatiquement, éventuellement en combinaison avec des valeurs de mesure d'une cellule de mesure (8) prévue en supplément, la mesure du poids du café moulu.

15. Procédé de fonctionnement d'un moulin à café (1) selon l'une des revendications précédentes,
**caractérisé en ce que**
le moulin à café (1) présente au moins un écran (17) sur lequel sont représentées la valeur réelle de la position de rotation ou de la largeur de fente (40) et la valeur de consigne nécessaire pour le degré de mouture souhaité,
ou une instruction de modifier manuellement un élément de réglage (13, 14) à actionner manuellement par l'utilisateur dans une direction déterminée jusqu'à ce que la valeur cible soit atteinte, et où cet affichage est de préférence modifié dynamiquement pendant que l'utilisateur manipule l'élément de réglage (13, 14) jusqu'à ce que la valeur cible souhaitée soit atteinte, et où il est de préférence prévu en outre des éléments de rétroaction optiques, acoustiques ou mécaniques ou une combinaison de ceux-ci qui indiquent à l'utilisateur si la valeur de consigne est atteinte.
